# EUROPÄISCHE PATENTSCHRIFT

(11) **EP 2 807 304 B1**
(45) Veröffentlichungstag und Bekanntmachung des Hinweises auf die Patenterteilung: **13.07.2016**
(21) Anmeldenummer: 12809811.8
(22) Anmeldetag: 19.12.2012
(51) Int. Cl.: B01J 20/10, B01J 20/32, D21C 9/16, B01J 23/28, C01G 39/00, D21C 9/18, D21C 11/00

(54) **VERFAHREN ZUR RÜCKGEWINNUNG VON MOLYBDAT BEI EINER MIT MOLYBDAT KATALYSIERTEN DELIGNIFIZIERUNG VON ZELLSTOFF MIT WASSERSTOFFPEROXID**
METHOD FOR RECOVERY OF MOLYBDATE IN A MOLYBDATE-CATALYSED DELIGNIFICATION OF PULP WITH HYDROGEN PEROXIDE
PROCÉDÉ DE RÉCUPÉRATION DE MOLYBDATE LORS DE LA DÉLIGNIFICATION, CATALYSÉE PAR MOLYBDATE, DE CELLULOSE À L'AIDE DE PEROXYDE D'HYDROGÈNE

(30) Priorität: 24.01.2012 DE 102012200990
(43) Veröffentlichungstag der Anmeldung: 03.12.2014
(73) Patentinhaber: Evonik Degussa GmbH, 45128 Essen (DE)
(72) Erfinder: DIETZ, Thomas, 63808 Haibach (DE); HOPF, Bernd, 63796 Kahl (DE); GRIMMER, Ralf, 63579 Freigericht (DE)
(86) Internationale Anmeldenummer: PCT/EP2012/076249
(87) Internationale Veröffentlichungsnummer: WO 2013/110419

(56) Entgegenhaltungen:
- EP-A1- 2 345 760
- WO-A1-2009/133053

## Beschreibung

Die Erfindung betrifft ein Verfahren zur Rückgewinnung von Molybdat bei einer mit Molybdat katalysierten Delignifizierung von Zellstoff mit Wasserstoffperoxid.

Üblicherweise wird die Zellstoffbleiche mit Wasserstoffperoxid im Alkalischen durchgeführt, da im Sauren bei erhöhter Temperatur Radikale gebildet werden, die zu unerwünschten Nebenreaktionen, wie dem Abbau von Zellulose, führen. Unter Verwendung eines geeigneten Katalysators ist jedoch eine Delignifizierung und Bleiche mit Wasserstoffperoxid auch unter sauren Bedingungen möglich.

US 4,427,490 beschreibt die Delignifizierung und Bleiche von Kraftzellstoff mit Wasserstoffperoxid im Sauren, katalysiert durch Natriumwolframat oder Natriummolybdat.

WO 2009/133053 beschreibt ein Verfahren zur Rückgewinnung von Molybdat oder Wolframat aus einer wässrigen Lösung, das sich zur Rückgewinnung von Molybdat oder Wolframat bei einer mit Molybdat oder Wolframat katalysierten Delignifizierung von Zellstoff mit Wasserstoffperoxid eignet. Bei diesem Verfahren wird Molybdat oder Wolframat bei einem pH-Wert im Bereich zwischen 2 und 6 an einem wasserunlöslichen, kationisierten anorganischen Trägermaterial adsorbiert und bei einem pH-Wert im Bereich zwischen 6 und 14 wieder vom Trägermaterial in eine wässrige Lösung desorbiert. Die Abtrennung des Trägermaterials nach der Adsorption und nach der Desorption erfolgt jeweils durch Sedimentieren, Filtrieren oder Zentrifugieren.

N. Sameer et al., Ind. Eng. Chem. Res. 47 (2008) 428-433 beschreiben ein Verfahren zur Rückgewinnung von Molybdat bei einer mit Molybdat katalysierten Delignifizierung von Zellstoff mit Wasserstoffperoxid, bei dem zur Abtrennung von Molybdat bei einem pH von 3 bis 4,5 mit Dodecylamin oder Cetyltrimethylammoniumbromid ein schwerlösliches Molybdatsalz gefällt wird, das gefällte Salz filtriert und in verdünnter Natronlauge wieder gelöst wird und das beim Lösen des Salzes freigesetzte Dodecylamin oder Cetyltrimethylammoniumsalz mit Isobutanol aus der erhaltenen Lösung extrahiert werden. Als Alternative zur Filtration wurde eine Flotation des mit Dodecylamin gefällten Salzes untersucht, die allerdings nur eine Rückgewinnung von 83 % des Molybdats ermöglichte.

Es wurde nun überraschend gefunden, dass sich bei der in WO 2009/133053 beschriebenen Rückgewinnung von Molybdat aus bei der Delignifizierung von Zellstoff erhaltenen Lösungen mit einem Trägermaterial, das ein mit einem quaternären Ammoniumsalz ionenausgetauschtes Schichtsilikat umfasst, das Trägermaterial sowohl im sauren als auch im alkalischen pH-Bereich durch Flotation abtrennen lässt, ohne dass dazu ein Tensid zugesetzt werden muss.

Gegenstand der Erfindung ist deshalb ein Verfahren zur Rückgewinnung von Molybdat bei einer mit Molybdat katalysierten Delignifizierung von Zellstoff mit Wasserstoffperoxid umfassend die Schritte
a) Delignifizieren von Zellstoff in einer wässrigen Mischung enthaltend 0,1 bis 5 Gew.-% Wasserstoffperoxid und 10 bis 2000 ppm Molybdän in Form von Molybdat, jeweils bezogen auf die Masse an trockenem Zellstoff, bei einer Temperatur von 30 bis 100 °C und einem pH-Wert im Bereich von 1 bis 7,
b) Abtrennen des delignifizierten Zellstoffs aus der in Schritt a) erhaltenen Mischung unter Erhalt einer wässrigen Lösung,
c) in Kontakt bringen der in Schritt b) erhaltenen wässrigen Lösung mit einem Trägermaterial, das ein mit einem quaternären Ammoniumsalz ionenausgetauschtes Schichtsilikat umfasst, bei einem pH-Wert im Bereich zwischen 2 und 7 unter Erhalt einer Mischung aus mit Molybdat beladenem Trägermaterial und einer an Molybdat abgereicherten wässrigen Lösung,
d) Abtrennen von mit Molybdat beladenem Trägermaterial aus der in Schritt c) erhaltenen Mischung durch Flotation unter Erhalt einer an Molybdat abgereicherten wässrigen Lösung,
e) in Kontakt bringen des mit Molybdat beladenen Trägermaterials mit einer wässrigen Lösung bei einem pH-Wert im Bereich zwischen 7 und 14 unter Erhalt einer Mischung aus an Molybdat abgereichertem Trägermaterial und einer mit Molybdat beladenen wässrigen Lösung,
f) Abtrennen von an Molybdat abgereichertem Trägermaterial aus der in Schritt e) erhaltenen Mischung unter Erhalt einer mit Molybdat beladenen wässrigen Lösung, und
g) Zurückführen der in Schritt f) erhaltenen mit Molybdat beladenen wässrigen Lösung in Schritt a).

Der Begriff Molybdat umfasst erfindungsgemäß sowohl einkerniges Molybdat MoO₄²⁻, als auch mehrkernige Molybdate, wie Mo₇O₂₄⁶- und Mo₈O₂₆⁴⁻ und Heteroatome enthaltende mehrkernige Molybdate, wie PMo₁₂O₄₀³⁻ und SiMo₁₂O₄₀³⁻.

Das erfindungsgemäße Verfahren umfasst in einem Schritt a) ein Delignifizieren von Zellstoff, bei dem Zellstoff in einer wässrigen Mischung mit Wasserstoffperoxid und Molybdän als Katalysator in Form von Molybdat umgesetzt wird.

Bei der Delignifizierung von Zellstoff unter Zusatz von Molybdat als Katalysator werden 0,1 bis 5 Gew.-%, vorzugsweise 0,2 bis 4 Gew.-% und besonders bevorzugt 0,3 bis 1 Gew.-% Wasserstoffperoxid, bezogen auf die Masse an trockenem Zellstoff, eingesetzt. Molybdat wird als Katalysator in einer Menge von 10 bis 2000 ppm, vorzugsweise 30 bis 700 ppm und besonders bevorzugt 50 bis 500 ppm Molybdän, bezogen auf die Masse an trockenem Zellstoff, eingesetzt. Durch die Wahl der Mengen an Wasserstoffperoxid und Molybdat in diesen Bereichen wird eine wirksame Delignifizierung und Bleiche des Zellstoffs erzielt und ein Zellstoff mit verringerter Vergilbungsneigung erhalten.

Die Delignifizierung von Zellstoff unter Zusatz von Molybdat als Katalysator wird bei einer Temperatur von 30 bis 100 °C, vorzugsweise 60 bis 95 °C und besonders bevorzugt 75 bis 95 °C durchgeführt, wobei der pH-Wert im Bereich von 1 bis 7, bevorzugt 2 bis 6 und besonders bevorzugt 2,5 bis 5,5 gewählt wird. Die Wahl der Reaktionsbedingungen bewirkt eine rasche und wirksame Delignifizierung und Bleiche des Zellstoffs. Außerdem lässt sich die Delignifizierung unter Zusatz von Molybdat bei diesen Reaktionsbedingungen mit nur geringem zusätzlichen Bedarf an Energie und/oder Chemikalien zur Einstellung von Temperatur und/oder pH-Wert mit weiteren Verfahrensstufen zur Delignifizierung und/oder Bleiche kombinieren.

Bei der Delignifizierung in Schritt a) kann zusätzlich zu Wasserstoffperoxid noch Chlordioxid zugesetzt werden. Chlordioxid kann dabei zusammen mit Wasserstoffperoxid eingesetzt werden. Vorzugsweise wird jedoch, wie in EP 2 345 760 A1 beschrieben, in einer Bleichstufe zuerst mit Chlordioxid und nach Umsetzung von mehr als 90 % des verwendeten Chlordioxids mit Wasserstoffperoxid und Molybdat als Katalysator delignifiziert.

In einem der Delignifizierung nachfolgenden Schritt b) wird der delignifizierte Zellstoff aus der in Schritt a) erhaltenen Mischung abgetrennt unter Erhalt einer wässrigen Lösung. Vorzugsweise erfolgt die Abtrennung durch Filtration, insbesondere durch Filtration mit einem Trommelfilter, einer Filterpresse oder einer Schneckenpresse. Geeignete Filtrationsverfahren sind dem Fachmann auf dem Gebiet der Zellstoffbleiche bekannt.

Die in Schritt b) erhaltene wässrige Lösung wird in einem nachfolgenden Schritt c) bei einem pH-Wert im Bereich zwischen 2 und 7 mit einem Trägermaterial in Kontakt gebracht, das ein mit einem quaternären Ammoniumsalz ionenausgetauschtes Schichtsilikat umfasst, wobei eine Mischung aus mit Molybdat beladenem Trägermaterial und eine an Molybdat abgereicherte wässrige Lösung erhalten werden.

In Schritt c) erfolgt das in Kontakt bringen der Molybdat enthaltenden wässrigen Lösung mit dem Trägermaterial bei einem pH-Wert im Bereich zwischen 2 und 7, vorzugsweise im Bereich von 3 bis 6, besonders bevorzugt im Bereich von 3,5 bis 5. Die Einstellung eines pH-Werts in diesen Bereichen ermöglicht eine fast vollständige Rückgewinnung von Molybdat aus der wässrigen Lösung bei einem geringen Verbrauch an den pH-Wert regulierenden Mitteln. Bei dem in Kontakt bringen wird das Trägermaterial vorzugsweise mit einem Rührer oder einem Dispergator in der Molybdat enthaltenden wässrigen Lösung verteilt. Das in Kontakt bringen kann bei einer beliebigen Temperatur erfolgen, geeignet sind Temperaturen im Bereich von 0 bis 100 °C. Das Trägermaterial wird in Schritt c) vorzugsweise in einer Menge von 10 bis 1000 Gewichtsteilen Trägermaterial je Gewichtsteil Molybdän eingesetzt. Besonders bevorzugt werden 50 bis 500 und insbesondere 100 bis 300 Gewichtsteile Trägermaterial je Gewichtsteil Molybdän eingesetzt.

Das in Schritt c) des erfindungsgemäßen Verfahrens eingesetzte Trägermaterial umfasst ein mit einem quaternären Ammoniumsalz ionenausgetauschtes Schichtsilikat. Vorzugsweise umfasst das Trägermaterial mehr als 30 Gew.-%, vorzugsweise mehr als 50 Gew.-%, mit einem quaternären Ammoniumsalz ionenausgetauschtes Schichtsilikat.

Als Schichtsilikate eignen sich dabei zum Beispiel Kaoline, Smektite, Illite, Bentonite (Montmorillonite), Hektorite, Pyrophillite, Attapulgite, Sepiolite und Laponite, vorzugsweise Bentonite, Hektorite und Attapulgite, besonders bevorzugt Bentonit.

Das verwendete quaternäre Ammoniumsalz weist vorzugsweise mindestens einen unpolaren Alkylrest mit 6 bis 24, besonders bevorzugt 10 bis 22 Kohlenstoffatomen auf, um eine Ablösung der quaternären Ammoniumionen vom Träger im Sauren zu verhindern und eine Flotation ohne Zusatz von Tensiden zu ermöglichen.

Mit quaternisierten Ammoniumsalzen ionenausgetauschte Bentonite, Hektorite und Attapulgite sind kommerziell erhältlich: Quaternium-18 Bentonit als Bentone 34 von Rheox Corp. und als Claytone 34, Claytone 40 und Claytone XL von Southern Clay; Stearalkonium Bentonit als Tixogel LG von United Catalysts, als Bentone SD-2 von Elementis Specialties und als Claytone AF und Claytone APA von Southern Clay; Quaternium-18/Benzalkonium Bentonit als Claytone GR, Claytone HT und Claytone PS von Southern Clay; Quaternium-18 Hectorite als Bentone 38 von Rheox Corp.; Hydrierter Ditalloylbenzalkonium Hectorit als Bentone SD-3 von Rheox Corp.; Stearalkonium Hectorit als Bentone 27 von Rheox Corp.; sowie kationisierter Attapulgit als Vistrol 1265 von Cimbar. Diese mit einem quaternären Ammoniumsalz ionenausgetauschten Schichtsilikate können in dem erfindungsgemäßen Verfahren sowohl als Pulver als auch in Form der im Handel erhältlichen Dispersionen in einem Öl oder einem organischen Lösungsmittel eingesetzt werden.

Neben den handelsüblichen, mit Tetraalkylammoniumionen ionenausgetauschten Bentoniten, Hektoriten und Attapulgiten können auch die entsprechenden mit quaternisierten Alkanolaminfettsäureestern ionenausgetauschten Materialien eingesetzt werden, insbesondere mit Dimethyldiethanolammonium-mono- und -difettsäureester, sowie Methyltriethanolammonium-mono-, -di- und -trifettsäureester ionenausgetauschter Bentonit. Vorzugsweise werden dabei entsprechende Ester mit gesättigten Fettsäuren, insbesondere gesättigten Fettsäuren mit 12 bis 18 Kohlenstoffatomen verwendet.

In einem nachfolgenden Schritt d) wird aus der in Schritt c) erhaltenen Mischung das mit Molybdat beladene Trägermaterial durch Flotation abgetrennt und eine an Molybdat abgereicherte wässrige Lösung erhalten.

Zur Abtrennung durch Flotation können alle dem Fachmann bekannten Flotationsverfahren, wie beispielsweise eine Begasungsflotation oder eine Entspannungsflotation, eingesetzt werden. Vorzugsweise wird eine Begasungsflotation eingesetzt, bei der ein Gas durch die Mischung aus Schritt c) geleitet wird. Besonders bevorzugt wird bei der Flotation Luft durch die in Schritt c) erhaltene Mischung geleitet. Die Flotation kann in aus dem Stand der Technik bekannten Flotationszellen durchgeführt werden. Zur Abtrennung des mit Molybdat beladenen Trägermaterials können eine oder mehrere in Reihe geschaltete Flotationsstufen eingesetzt werden. Vorzugsweise wird nach der Flotation die an Molybdat abgereicherte Lösung zusätzlich filtriert um das mit Molybdat beladene Trägermaterial möglichst vollständig abzutrennen.

Das mit Molybdat beladene Trägermaterial lässt sich überraschenderweise auch ohne Zusatz eines schaumbildenden Tensids gut und zu einem hohen Anteil durch Flotation abtrennen. Zur Regulation der Schaummenge und zur Verbesserung der Abtrennung können bei der Flotation zusätzlich auch dem Fachmann bekannte Flotationshilfsmittel zugesetzt werden, wie zum Beispiel Flockungshilfsmittel, schaumbildende Tenside oder Entschäumer.

Die Abtrennung des mit Molybdat beladenen Trägermaterials durch Flotation hat gegenüber der aus WO 2009/133053 bekannten Abtrennung durch Sedimentieren, Filtrieren oder Zentrifugieren den Vorteil, dass sie mit kleineren und einfacheren Apparaten durchgeführt werden kann und weniger Energie zur Abtrennung benötigt. Durch eine Kombination aus Flotation und nachfolgender Filtration kann eine hohe Rückgewinnung des mit Molybdat beladenen Trägermaterials bei geringem Energieaufwand erzielt werden.

Bei der Abtrennung durch Flotation wird das mit Molybdat beladene Trägermaterial in Form eines wässrigen Schaums abgetrennt, der auch als Flotat bezeichnet wird. Vorzugsweise wird dieser wässrigen Schaum in eine konzentrierte wässrige Suspension überführt und die resultierende wässrige Suspension filtriert, um das mit Molybdat beladene Trägermaterial von im Flotat enthaltenen Wasser zu trennen. Der Schaum kann dabei durch Stehen lassen oder durch eine andere dem Fachmann für Floatationsverfahren bekannte Methode in eine konzentrierte wässrige Suspension überführt werden. Bei der Filtration des Flotats wird im Vergleich zu der in WO 2009/133053 beschriebenen Filtration der gesamten Mischung ein wesentlich geringerer Volumenstrom filtriert, so dass eine viel kleinere Filtrationsanlage verwendet werden kann, die einen geringeren Energiebedarf hat.

Zur Verbesserung einer sich an die Flotation anschließenden Filtration können während oder nach der Flotation wasserunlösliche Filterhilfsmittel zugesetzt werden. Als wasserunlösliche Filterhilfsmittel eignen sich die aus dem Stand der Technik bekannten Filterhilfsmittel, die synthetischer oder natürlicher, organischer oder anorganischer Natur sein können. Ein geeignetes anorganisches Filterhilfsmittel ist beispielsweise das unter dem Handelsnamen Celite 503 von der Firma Merck erhältliche Silicagel. Ein geeignetes natürliches organisches Filterhilfsmittel ist beispielsweise Cellulose, die unter dem Handelsnamen Jelucel HM 200 von der Firma Jelu erhältlich ist.

Das in Schritt c) mit Molybdat beladene und in Schritt d) abgetrennte Trägermaterial wird in einem Schritt e) bei einem pH-Wert im Bereich zwischen 7 und 14 mit einer wässrigen Lösung in Kontakt gebracht, wodurch Molybdat vom Trägermaterial abgelöst wird und eine Mischung aus an Molybdat abgereichertem Trägermaterial und einer mit Molybdat beladenen wässrigen Lösung erhalten wird.

Der pH-Wert wird dabei vorzugsweise im Bereich von 7 bis 12 und besonders bevorzugt im Bereich von 8 bis 11 gewählt. Die Einstellung eines pH-Werts in diesen Bereichen ermöglicht eine fast vollständige Ablösung von Molybdat vom Trägermaterial bei einem geringen Verbrauch an den pH-Wert regulierenden Mitteln. Bei dem in Kontakt bringen wird das mit Molybdat beladene Trägermaterial vorzugsweise mit einem Rührer oder einem Dispergator in der wässrigen Lösung verteilt. Das in Kontakt bringen kann bei einer beliebigen Temperatur erfolgen, geeignet sind Temperaturen im Bereich von 0 bis 100 °C.

In einem nachfolgenden Schritt f) wird das an Molybdat abgereicherte Trägermaterial von der mit Molybdat beladenen wässrigen Lösung abgetrennt. Das Abtrennen kann mit allen dem Fachmann bekannten Fest-Flüssig-Trennverfahren erfolgen, beispielsweise durch Sedimentieren, Filtrieren oder Zentrifugieren. In einer bevorzugten Ausführungsform wird das an Molybdat abgereicherte Trägermaterial durch Filtration abgetrennt. In einer alternativen bevorzugten Ausführungsform wird das an Molybdat abgereicherte Trägermaterial durch Flotation abgetrennt. Die Flotation kann dabei wie für Schritt d) beschrieben erfolgen. Das an Molybdat abgereicherte Trägermaterial lässt sich auch bei einem pH-Wert im alkalischen Bereich überraschenderweise ohne Zusatz eines schaumbildenden Tensids gut und zu einem hohen Anteil durch Flotation abtrennen.

Das abgetrennte, an Molybdat abgereicherte Trägermaterial kann zusätzlich mit einer wässrigen Lösung mit einem pH-Wert zwischen 6 und 14 gewaschen werden, um die Ablösung von Molybdat vom Trägermaterial zu vervollständigen. Die beim Waschen resultierende Waschflüssigkeit wird vorzugsweise mit der mit Molybdat beladenen wässrigen Lösung vereinigt.

Die in Schritt f) erhaltene, mit Molybdat beladene wässrige Lösung wird anschließend in Schritt a) zurückgeführt.

Das in Schritt f) abgetrennte, an Molybdat abgereicherte Trägermaterial wird vorzugsweise in Schritt c) des Verfahrens zurückgeführt und wieder zur Rückgewinnung von Molybdat eingesetzt.

Die nachfolgenden Beispiele illustrieren das beanspruchte Verfahren, ohne jedoch den Gegenstand der Erfindung zu beschränken.

### Beispiel:

831,3 g Eukalyptuszellstoff, entsprechend 200 g absolut trockenem Zellstoff, mit einer Kappazahl von 13,0, einem Weißgehalt von 54,0 % ISO und einem Gelbwert von 30,3 wurden mit Wasser, 0,5 Gew.-% Wasserstoffperoxid und 500 ppm Molybdän in Form von Natriummolybdat (bezogen auf absolut trockenen Zellstoff) auf eine Stoffdichte von 10 Gew.-% gebracht und der pH-Wert wurde mit Schwefelsäure auf pH 3,0 eingestellt. Die Mischung wurde in einem Plastikbeutel im Wasserbad 120 min auf 90 °C erhitzt. Danach wurde Wasser zugegeben, so dass eine Suspension mit 4 Gew.-% Stoffdichte erhalten wurde, und der Zellstoff über eine Filternutsche mit Filterpapier abfiltriert. Der behandelte Zellstoff hatte eine Kappazahl von 5,2, einen Weißgehalt von 53,0 % ISO und einen Gelbwert von 31,1. Das erhaltene Filtrat hatte einen pH-Wert von 3,7. Das Filtrat enthielt 19 ppm Molybdän, was 95 % der eingesetzten Menge entsprach.

Zu 600 g des noch 70 °C warmen Filtrats wurden in einem 1000 ml Becherglas 6,0 g kationisch modifizierter Bentonit BETONE® SD-2 (Elementis Specialties) zugegeben und mit einem Magnetrührmotor 2 Minuten gerührt. Die Suspension wurde dann in einen Büchner-Trichter mit Glasfrittenboden (Durchmesser 130 mm, Höhe 98 mm, Glasfritte Typ G1 mit 100 bis 160 µm Porengröße) überführt, der mit einem gebohrten Gummistopfen auf einer Saugflasche aufgesetzt war, bei der über den Saugstutzen Luft mit 2,2 l/min durch den Glasfrittenboden geleitet wurde. Im Büchner-Trichter bildete sich durch Flotation ein hellbrauner Schaum an der Flüssigkeitsoberfläche, der mit einem Löffel abgeschöpft und in einen Becher überführt wurde. Nach 2 Minuten Flotation wurde die Luftzufuhr beendet, wonach die Flüssigkeit innerhalb weniger Sekunden in die Saugflasche abfloss. Die Flüssigkeit enthielt 1,0 ppm Molybdän, was einer Abtrennung von Molybdän von 95 % entspricht. Der gesammelte Flotationsschaum wurde über eine Filternutsche mit Filterpapier abfiltriert und der Filterkuchen trockengesaugt.

Ein Anteil von 2,4 g des luftgetrockneten Filterkuchens wurde in 83 g Wasser suspendiert und auf einer Heizplatte mit Magnetrührmotor unter Rühren auf 70 °C erwärmt. Dann wurde durch Zugabe von Natronlauge ein pH von 8 eingestellt und weitere 2 Minuten gerührt. Anschließend wurde die Suspension wie im vorangehenden Absatz beschrieben in einem Büchner-Trichter flotiert. Es bildete sich ein hellbrauner Schaum an der Flüssigkeitsoberfläche, der mit einem Löffel abgeschöpft und in einen Becher überführt wurde. Nach 2 Minuten Flotation wurde die Luftzufuhr beendet, wonach die Flüssigkeit innerhalb weniger Sekunden in die Saugflasche abfloss. Der gesammelte Flotationsschaum wurde über eine Filternutsche mit Filterpapier abfiltriert, der Filterkuchen mit zwei Portionen von je 8 g Wasser mit pH 8 gewaschen und anschließend trockengesaugt. Das Waschwasser wurde mit dem Flotationswasser und dem Flotationsschaumfiltrat vereinigt und der Molybdängehalt bestimmt. Aus dem Molybdängehalt berechnet sich eine Rückgewinnungsrate an Molybdän von 88 %, bezogen auf die für die Delignifizierung eingesetzte Menge an Molybdän.

Ein weiterer Anteil von 2,4 g des luftgetrockneten Filterkuchens wurde in 39 g Wasser suspendiert und auf einer Heizplatte mit Magnetrührmotor unter Rühren auf 70 °C erwärmt. Dann wurde durch Zugabe von Natronlauge ein pH von 8 eingestellt und weitere 15 Minuten gerührt. Anschließend wurde die Suspension über eine Filternutsche mit Filterpapier filtriert, der Filterkuchen mit zwei Portionen von je 4 g Wasser mit pH 8 gewaschen und anschließend trockengesaugt. Das Waschwasser wurde mit dem Filtrat vereinigt und der Molybdängehalt bestimmt. Aus dem Molybdängehalt berechnet sich eine Rückgewinnungsrate an Molybdän von 90 %, bezogen auf die für die Delignifizierung eingesetzte Menge an Molybdän.

## Patentansprüche

1. Verfahren zur Rückgewinnung von Molybdat bei einer mit Molybdat katalysierten Delignifizierung von Zellstoff mit Wasserstoffperoxid umfassend die Schritte
a) Delignifizieren von Zellstoff in einer wässrigen Mischung enthaltend 0,1 bis 5 Gew.-% Wasserstoffperoxid und 10 bis 2000 ppm Molybdän in Form von Molybdat, jeweils bezogen auf die Masse an trockenem Zellstoff, bei einer Temperatur von 30 bis 100 °C und einem pH-Wert im Bereich von 1 bis 7,
b) Abtrennen des delignifizierten Zellstoffs aus der in Schritt a) erhaltenen Mischung unter Erhalt einer wässrigen Lösung,
c) in Kontakt bringen der in Schritt b) erhaltenen wässrigen Lösung mit einem Trägermaterial, das ein mit einem quaternären Ammoniumsalz ionenausgetauschtes Schichtsilikat umfasst, bei einem pH-Wert im Bereich zwischen 2 und 7 unter Erhalt einer Mischung aus mit Molybdat beladenem Trägermaterial und einer an Molybdat abgereicherten wässrigen Lösung,
d) Abtrennen von mit Molybdat beladenem Trägermaterial aus der in Schritt c) erhaltenen Mischung durch Flotation unter Erhalt einer an Molybdat abgereicherten wässrigen Lösung,
e) in Kontakt bringen des mit Molybdat beladenen Trägermaterials mit einer wässrigen Lösung bei einem pH-Wert im Bereich zwischen 7 und 14 unter Erhalt einer Mischung aus an Molybdat abgereichertem Trägermaterial und einer mit Molybdat beladenen wässrigen Lösung,
f) Abtrennen von an Molybdat abgereichertem Trägermaterial aus der in Schritt e) erhaltenen Mischung unter Erhalt einer mit Molybdat beladenen wässrigen Lösung, und
g) Zurückführen der in Schritt f) erhaltenen mit Molybdat beladenen wässrigen Lösung in Schritt a).

2. Verfahren nach Anspruch 1, **dadurch gekennzeichnet, dass** in Schritt d) bei der Flotation Luft durch die in Schritt c) erhaltene Mischung geleitet wird.

3. Verfahren nach Anspruch 1 oder 2, **dadurch gekennzeichnet, dass** in Schritt d) nach der Flotation die an Molybdat abgereicherte wässrige Lösung zusätzlich filtriert wird.

4. Verfahren nach einem der Ansprüche 1 bis 3, **dadurch gekennzeichnet, dass** in Schritt d) mit Molybdat beladenes Trägermaterial durch Flotation als wässriger Schaum abgetrennt wird, der wässrige Schaum in eine konzentrierte wässrige Suspension überführt wird und die konzentrierte wässrige Suspension filtriert wird.

5. Verfahren nach einem der Ansprüche 1 bis 4, **dadurch gekennzeichnet, dass** in Schritt f) an Molybdat abgereichertes Trägermaterial durch Flotation abgetrennt wird.

6. Verfahren nach einem der Ansprüche 1 bis 5, **dadurch gekennzeichnet, dass** das Trägermaterial mehr als 30 Gew.-%, vorzugsweise mehr als 50 Gew.-%, mit einem quaternären Ammoniumsalz ionenausgetauschtes Schichtsilikat umfasst.

7. Verfahren nach einem der Ansprüche 1 bis 6, **dadurch gekennzeichnet, dass** das Schichtsilikat ein Bentonit, Hektorit oder Attapulgit ist.

8. Verfahren nach einem der Ansprüche 1 bis 7, **dadurch gekennzeichnet, dass** das quaternäre Ammoniumsalz mindestens einen unpolaren Alkylrest mit 6 bis 24, vorzugsweise 10 bis 22, Kohlenstoffatomen aufweist.

9. Verfahren nach einem der Ansprüche 1 bis 8, **dadurch gekennzeichnet, dass** in Schritt f) abgetrenntes an Molybdat abgereichertes Trägermaterial in Schritt c) zurückgeführt wird.

10. Verfahren nach einem der Ansprüche 1 bis 9, **dadurch gekennzeichnet, dass** in Schritt a) die wässrige Mischung 0,2 bis 4 Gew.-%, vorzugsweise 0,3 bis 1 Gew.-%, Wasserstoffperoxid, bezogen auf die Masse an trockenem Zellstoff, enthält.

11. Verfahren nach einem der Ansprüche 1 bis 10, **dadurch gekennzeichnet, dass** in Schritt a) die wässrige Mischung 30 bis 700 ppm, vorzugsweise 50 bis 500 ppm, Molybdän, bezogen auf die Masse an trockenem Zellstoff, in Form von Molybdat enthält.

12. Verfahren nach einem der Ansprüche 1 bis 11, **dadurch gekennzeichnet, dass** in Schritt a) das Delignifizieren des Zellstoffs bei einer Temperatur von 60 bis 95 °C, vorzugsweise 75 bis 95 °C, erfolgt.

13. Verfahren nach einem der Ansprüche 1 bis 12, **dadurch gekennzeichnet, dass** in Schritt a) das Delignifizieren des Zellstoffs bei einem pH-Wert von 2 bis 6, vorzugsweise 2,5 bis 5,5, erfolgt.

14. Verfahren nach einem der Ansprüche 1 bis 13, **dadurch gekennzeichnet, dass** in Schritt c) der pH-Wert im Bereich von 3 bis 6 und vorzugsweise im Bereich von 3,5 bis 5 liegt.

15. Verfahren nach einem der Ansprüche 1 bis 14, **dadurch gekennzeichnet, dass** in Schritt e) der pH-Wert im Bereich von 7 bis 12 und vorzugsweise im Bereich von 8 bis 11 liegt.

16. Verfahren nach einem der Ansprüche 1 bis 15, **dadurch gekennzeichnet, dass** in Schritt c) 10 bis 1000, vorzugsweise 50 bis 500, Gewichtsteile Trägermaterial je Gewichtsteil Molybdän eingesetzt werden.

## Claims

1. Process for recovering molybdate in a molybdate-catalyzed delignification of pulp with hydrogen peroxide, comprising the steps
a) delignification of pulp in an aqueous mixture containing from 0.1 to 5% by weight of hydrogen peroxide and from 10 to 2000 ppm of molybdenum in the form of molybdate, in each case based on the mass of dry pulp, at a temperature of from 30 to 100°C and a pH in the range from 1 to 7,
b) separation of the delignified pulp from the mixture obtained in step a) to give an aqueous solution,
c) contacting the aqueous solution obtained in step b) at a pH in the range from 2 to 7 with a carrier material comprising a sheet silicate ion-exchanged with a quaternary ammonium salt to give a mixture of molybdate loaded carrier material and an aqueous solution depleted in molybdate,
d) separation of molybdate loaded carrier material from the mixture obtained in step c) by flotation to give an aqueous solution depleted in molybdate,
e) contacting the molybdate loaded carrier material with an aqueous solution at a pH in the range from 7 to 14 to give a mixture of carrier material depleted in molybdate and an aqueous solution loaded with molybdate,
f) separation of carrier material depleted in molybdate from the mixture obtained in step e) to give an aqueous solution loaded with molybdate and
g) recycling the aqueous solution loaded with molybdate obtained in step f) to step a).

2. Process according to Claim 1, **characterized in that**, in the flotation in step d), air is passed through the mixture obtained in step c).

3. Process according to Claim 1 or 2, **characterized in that**, in step d), the aqueous solution depleted in molybdate is additionally filtered after flotation.

4. Process according to any one of Claims 1 to 3, **characterized in that**, in step d), molybdate loaded carrier material is separated as aqueous foam by flotation, the aqueous foam is converted into a concentrated aqueous suspension and the concentrated aqueous suspension is filtered.

5. Process according to any one of Claims 1 to 4, **characterized in that**, in step f), carrier material depleted in molybdate is separated by flotation.

6. Process according to any one of Claims 1 to 5, **characterized in that** the carrier material comprises more than 30% by weight, preferably more than 50% by weight, of sheet silicate ion-exchanged with a quaternary ammonium salt.

7. Process according to any one of Claims 1 to 6, **characterized in that** the sheet silicate is a bentonite, hectorite or attapulgite.

8. Process according to any one of Claims 1 to 7, **characterized in that** the quaternary ammonium salt has at least one nonpolar alkyl radical having from 6 to 24 carbon atoms, preferably from 10 to 22 carbon atoms.

9. Process according to any one of Claims 1 to 8, **characterized in that** molybdate depleted carrier material which has been separated in step f) is recycled to step c).

10. Process according to any one of Claims 1 to 9, **characterized in that**, in step a), the aqueous mixture contains from 0.2 to 4% by weight, preferably from 0.3 to 1% by weight, of hydrogen peroxide, based on the mass of dry pulp.

11. Process according to any one of Claims 1 to 10, **characterized in that**, in step a), the aqueous mixture contains from 30 to 700 ppm, preferably from 50 to 500 ppm, of molybdenum in the form of molybdate, based on the mass of dry pulp.

12. Process according to any one of Claims 1 to 11, **characterized in that**, in step a), the delignification of the pulp is carried out at a temperature of from 60 to 95°C, preferably from 75 to 95°C.

13. Process according to any one of Claims 1 to 12, **characterized in that**, in step a), the delignification of the pulp is carried out at a pH of from 2 to 6, preferably from 2.5 to 5.5.

14. Process according to any one of Claims 1 to 13, **characterized in that**, in step c), the pH is in the range from 3 to 6 and preferably in the range from 3.5 to 5.

15. Process according to any one of Claims 1 to 14, **characterized in that**, in step e), the pH is in the range from 7 to 12 and preferably in the range from 8 to 11.

16. Process according to any one of Claims 1 to 15, **characterized in that**, in step c), from 10 to 1000 parts by weight, preferably from 50 to 500 parts by weight, of carrier material per part by weight of molybdenum are used.

## Revendications

1. Procédé de récupération de molybdate lors d'une délignification de cellulose avec du peroxyde d'hydrogène catalysée par du molybdate, comprenant les étapes suivantes :
a) la délignification de cellulose dans un mélange aqueux contenant 0,1 à 5 % en poids de peroxyde d'hydrogène et 10 à 2 000 ppm de molybdène sous la forme de molybdate, à chaque fois par rapport à la masse de cellulose sèche, à une température de 30 à 100 °C et à un pH dans la plage allant de 1 à 7,
b) la séparation de la cellulose délignifiée du mélange obtenu à l'étape a) pour obtenir une solution aqueuse,
c) la mise en contact de la solution aqueuse obtenue à l'étape b) avec un matériau support, qui comprend un silicate stratifié à ions échangés avec un sel d'ammonium quaternaire, à un pH dans la plage comprise entre 2 et 7, pour obtenir un mélange d'un matériau support chargé avec du molybdate et d'une solution aqueuse appauvrie en molybdate,
d) la séparation du matériau support chargé avec du molybdate du mélange obtenu à l'étape c) par flottation, pour obtenir une solution aqueuse appauvrie en molybdate,
e) la mise en contact du matériau support chargé avec du molybdate avec une solution aqueuse à un pH dans la plage comprise entre 7 et 14, pour obtenir un mélange d'un matériau support appauvri en molybdate et d'une solution aqueuse chargée avec du molybdate,
f) la séparation du matériau support appauvri en molybdate du mélange obtenu à l'étape e), pour obtenir une solution aqueuse chargée avec du molybdate, et
g) le recyclage de la solution aqueuse chargée avec du molybdate obtenue à l'étape f) dans l'étape a).

2. Procédé selon la revendication 1, **caractérisé en ce qu'**à l'étape d), de l'air est conduit au travers du mélange obtenu à l'étape c) lors de la flottation.

3. Procédé selon la revendication 1 ou 2, **caractérisé en ce qu'**à l'étape d), la solution aqueuse appauvrie en molybdate est en outre filtrée après la flottation.

4. Procédé selon l'une quelconque des revendications 1 à 3, **caractérisé en ce qu'**à l'étape d), le matériau support chargé avec du molybdate est séparé par flottation sous la forme d'une mousse aqueuse, la mousse aqueuse est transformée en une suspension aqueuse concentrée, et la suspension aqueuse concentrée est filtrée.

5. Procédé selon l'une quelconque des revendications 1 à 4, **caractérisé en ce qu'**à l'étape f), le matériau support appauvri en molybdate est séparé par flottation.

6. Procédé selon l'une quelconque des revendications 1 à 5, **caractérisé en ce que** le matériau support comprend plus de 30 % en poids, de préférence plus de 50 % en poids, de silicate stratifié à ions échangés avec un sel d'ammonium quaternaire.

7. Procédé selon l'une quelconque des revendications 1 à 6, **caractérisé en ce que** le silicate stratifié est une bentonite, une hectorite ou une attapulgite.

8. Procédé selon l'une quelconque des revendications 1 à 7, **caractérisé en ce que** le sel d'ammonium quaternaire comprend au moins un radical alkyle apolaire de 6 à 24, de préférence 10 à 22, atomes de carbone.

9. Procédé selon l'une quelconque des revendications 1 à 8, **caractérisé en ce que** le matériau support appauvri en molybdate séparé à l'étape f) est recyclé dans l'étape c).

10. Procédé selon l'une quelconque des revendications 1 à 9, **caractérisé en ce qu'**à l'étape a), le mélange aqueux contient 0,2 à 4 % en poids, de préférence 0,3 à 1 % en poids, de peroxyde d'hydrogène, par rapport à la masse de cellulose sèche.

11. Procédé selon l'une quelconque des revendications 1 à 10, **caractérisé en ce qu'**à l'étape a), le mélange aqueux contient 30 à 700 ppm, de préférence 50 à 500 ppm, de molybdène, par rapport à la masse de cellulose sèche, sous la forme de molybdate.

12. Procédé selon l'une quelconque des revendications 1 à 11, **caractérisé en ce qu'**à l'étape a), la délignification de la cellulose a lieu à une température de 60 à 95 °C, de préférence de 75 à 95 °C.

13. Procédé selon l'une quelconque des revendications 1 à 12, **caractérisé en ce qu'**à l'étape a), la délignification de la cellulose a lieu à un pH de 2 à 6, de préférence de 2,5 à 5,5.

14. Procédé selon l'une quelconque des revendications 1 à 13, **caractérisé en ce qu'**à l'étape c), le pH se situe dans la plage allant de 3 à 6 et de préférence dans la plage allant de 3,5 à 5.

15. Procédé selon l'une quelconque des revendications 1 à 14, **caractérisé en ce qu'**à l'étape e), le pH se situe dans la plage allant de 7 à 12 et de préférence dans la plage allant de 8 à 11.

16. Procédé selon l'une quelconque des revendications 1 à 15, **caractérisé en ce qu'**à l'étape c), 10 à 1 000, de préférence 50 à 500, parties en poids de matériau support par partie en poids de molybdène sont utilisées.
